# EUROPÄISCHE PATENTANMELDUNG

(11) **EP 3 789 629 A1**
(43) Veröffentlichungstag der Anmeldung: **10.03.2021**
(21) Anmeldenummer: 19195039.3
(22) Anmeldetag: 03.09.2019
(51) Int. Cl.: F16F 1/373, F16F 9/54

(54) **DÄMPFERLAGER FÜR EIN FAHRZEUG**

(71) Anmelder: BASF Polyurethanes GmbH, 49448 Lemförde (DE)
(72) Erfinder: Dubenhorst, Stephan, 49448 Lemfoerde (DE); Horstmann, Andreas, 49448 Lemfoerde (DE); Wolff, Mario, 49448 Lemfoerde (DE)
(74) Vertreter: Eisenführ Speiser

(57) **Zusammenfassung**

Das Dämpferlager (10) weist eine Längsachse (Z), einen Metallkern (100) mit einem mittigen Kernloch (130) entlang der Längsachse (Z) zur Aufnahme eines zu dämpfenden Elementes (30) und einer ersten und zweiten Kontaktfläche (110, 120), einer ersten Dämpfungseinheit (200) aus einem nicht-volumenkompressiblen Material mit mindestens einer ersten und zweiten Kontaktfläche (210, 220) sowie einem Loch (230) und eine zweite Dämpfungseinheit (300) aus einem volumenkompressiblen Material mit einer ersten und zweiten äußeren Kontaktfläche (311, 312) und einem Loch (315) auf. Die erste oder zweiten Dämpfungseinheit (200, 300) umgibt den Metallkern (100) mit dem Kernloch (130) zumindest teilweise derart, dass das Kernloch (130) frei bleibt. Die zweite oder die erste Dämpfungseinheit (300, 200) umgibt die erste oder die zweite Dämpfungseinheit (200, 300) zumindest teilweise, bzw. berührt die erste oder die zweite Dämpfungseinheit(200, 300) lediglich an den Stirn- oder Mantelflächen, so dass das Kernloch (130) frei bleibt und so dass die erste Kontaktfläche (210) der ersten Dämpfungseinheit (200) oder die ersten und zweiten äußeren Kontaktflächen (311, 312) der zweiten Dämpfungseinheit (300) äußere Auflagenflächen des Dämpferlagers (10) in Längsrichtung (z) bilden. Die Kontaktflächen (210, 220; 311, 312) sind jeweils senkrecht zur Längsachse (Z) ausgerichtet.

## Beschreibung

Die vorliegende Erfindung betrifft ein Dämpferlager für ein Fahrzeug.

Dämpferlager werden beispielsweise in Automobilien im Bereich des Fahrwerkes verwendet. Die Dämpferlager können beispielsweise als schwingungsdämpfende Federelemente eingesetzt werden. Die Dämpferlager können ferner beispielsweise eine Anbindung eines Stoßdämpfers an eine Karosserie oder eine Fahrwerkskomponente sicherstellen. Die Dämpferlager weisen typischerweise eine elastische Ankopplung auf, wodurch Schwingungen isoliert werden können, die von der Fahrbahn hervorgerufen und über das Rad und Stoßdämpfer weitergeleitet werden. Durch die Dämpferlager soll eine kardanische Bewegung der Stoßdämpfer ermöglicht werden.

Durch das Zusammenspiel des dämpfenden Elementes, insbesondere eines Stoßdämpfers und dem Dämpferlager, kann der Fahrkomfort, die Fahrsicherheit, eine Wank-/Nickabstützung und eine Reduktion von Effekten des Radstuckerns und des Karosseriezitterns reduziert werden.

DE 10 2007 011 209 A1 zeigt ein Dämpferlager mit einem hohlen zylindrischen Dämpfungselement und einem Einleger mit einem Hohlraum. Das Dämpfungselement weist auf seiner oberen und unteren Stirnfläche Erhebungen und Senken auf. Der Einleger ist gerade ausgestaltet. Das Dämpfungselement umgibt den Einleger. Das Dämpfungselement basiert auf Elastomeren.

Es ist eine Aufgabe der vorliegenden Erfindung, ein Dämpferlager vorzusehen, welches eine einfache Konstruktion ermöglicht. Es ist insbesondere eine Aufgabe der vorliegenden Erfindung, ein Dämpferlager mit einer höheren Energieaufnahme in einem kompakten Bauraum vorzusehen.

Diese Aufgabe wird durch ein Dämpferlager gemäß Anspruch 1 gelöst.

Somit weist das Dämpferlager eine Längsachse, einen Metallkern mit einem mittigen Kernloch entlang der Längsachse zur Aufnahme eines zu dämpfenden Elementes und einer ersten und zweiten Kontaktfläche, einer ersten Dämpfungseinheit aus einem nicht-volumenkompressiblen Material mit mindestens einer ersten und zweiten Kontaktfläche sowie einem Loch und eine zweite Dämpfungseinheit aus einem volumenkompressiblen Material mit einer ersten und zweiten äußeren Kontaktfläche und einem Loch auf. Die erste oder zweiten Dämpfungseinheit umgibt den Metallkern mit dem Kernloch zumindest teilweise derart, dass das Kernloch frei bleibt. Die zweite oder die erste Dämpfungseinheit umgibt die erste oder die zweite Dämpfungseinheit zumindest teilweise, bzw. berührt die erste oder die zweite Dämpfungseinheit lediglich an den Stirn- oder Mantelflächen, so dass das Kernloch frei bleibt und so dass die erste Kontaktfläche der ersten Dämpfungseinheit oder die ersten und zweiten äußeren Kontaktflächen der zweiten Dämpfungseinheit äußere Auflagenflächen des Dämpferlagers in Längsrichtung bilden. Die Kontaktflächen sind jeweils senkrecht zur Längsachse ausgerichtet.

Das erfindungsgemäße Dämpferlager weist verbesserte Energieaufnahmeeigenschaften bei geringerer Bauhöhe auf. Des Weiteren können durch die Verwendung von zwei unterschiedlichen Materialien mit unterschiedliche Dämpfungseigenschaften die Gesamtcharakteristik des Hybridlagers in einem breiten Spektrum eingestellt werden.

Gemäß einem Aspekt der vorliegenden Erfindung weist die zweite Dämpfungseinheit ein inneres Volumen mit einer ersten und zweiten inneren Kontaktfläche auf. Die erste und zweite innere Kontaktfläche der zweiten Dämpfungseinheit ist in Kontakt mit den ersten und zweiten Kontaktflächen des Metallkerns. Die ersten und zweiten äußeren Kontaktflächen der zweiten Dämpfungseinheit sind in Kontakt mit den zweiten Kontaktflächen der ersten Dämpfungseinheit. Die ersten Kontaktflächen der ersten Dämpfungseinheit bilden die äußeren Auflageflächen des Dämpferlagers.

Gemäß einem weiteren Aspekt der vorliegenden Erfindung weisen die zweiten Kontaktflächen der ersten Dämpfungseinheit Vorsprünge und Ausnehmungen auf. Im nicht vorgespannten Zustand des Dämpferlagers sind die Vorsprünge in Kontakt mit der ersten und zweiten äußeren Kontaktfläche der zweiten Dämpfungseinheit.

Gemäß einem weiteren Aspekt der vorliegenden Erfindung weist die zweite Dämpfungseinheit ein inneres Volumen mit einer ersten und zweiten inneren Kontaktfläche auf. Die inneren Kontaktflächen der zweiten Dämpfungseinheit sind in Kontakt mit den zweiten Kontaktflächen der ersten Dämpfungseinheit. Die ersten Kontaktflächen der ersten Dämpfungseinheit sind in Kontakt mit der ersten und zweiten Kontaktfläche des Metallkerns.

Gemäß einem weiteren Aspekt der vorliegenden Erfindung weisen die zweiten Kontaktflächen der ersten Dämpfungseinheit Vorsprünge und Ausnehmungen auf. Im nicht vorgespannten Zustand des Dämpferlagers sind die Vorsprünge in Kontakt mit den ersten und zweiten inneren Kontaktflächen der zweiten Dämpfungseinheit.

Gemäß einem weiteren Aspekt der vorliegenden Erfindung sind sowohl die erste als auch die zweite Dämpfungseinheit ringförmig ausgestaltet. Die zweite Dämpfungseinheit weist ein Volumen mit einer ersten und zweiten inneren Kontaktfläche auf. Die ersten und zweiten inneren Kontaktflächen der zweiten Dämpfungseinheit sind in Kontakt mit den ersten und zweiten Kern-Kontaktflächen des Metallkerns. Die ersten Kontaktflächen der ersten Dämpfungseinheit sind ebenfalls in Kontakt mit den ersten und zweiten Kernkontaktflächen des Kerns.

Gemäß einem Aspekt der vorliegenden Erfindung weist die erste Dämpfungseinheit eine erste Dicke auf. Die zweite Dämpfungseinheit weist jeweils zwischen den inneren und äußeren Kontaktflächen eine zweite Dicke auf, welche größer als die erste Dicke ist.

Die Erfindung betrifft ebenfalls ein Fahrzeug mit einer Fahrwerkskomponente und einem oben beschriebenen Dämpfungslager zum Dämpfen der Fahrwerkskomponente.

Gemäß einem Aspekt der Erfindung weist mindestens eine Kontaktfläche der zweiten Dämpfungseinheit Vorsprünge und Ausnehmungen auf.

Gemäß einem Aspekt der Erfindung können die Lager und/oder die Kontaktflächen glatt ausgestaltet sein oder sie können eine konturierte Oberfläche oder eine Wellenkontur aufweisen.

Die zweite Dämpfungseinheit des Dämpferlagers kann aus einem Polyurethanelastomer hergestellt werden. Insbesondere kann eine kardanische Bewegung der Kolbenstange, welche in der Dämpfungseinheit gelagert ist, ermöglicht werden, wobei die Kolbenstange Teil beispielsweis eines Federelementes oder eines Stoßdämpfers sein kann. Ferner werden durch das erfindungsgemäße Dämpferlager die Anforderungen an die Kraft-Weg-Kennungen in axialer, radialer und kardanischer Richtung erfüllt.

In einer weiteren bevorzugten Ausführungsform ist das elastisch verformbare Material der zweiten Dämpfungseinheit ein volumenkompressibles Material.

Besonders bevorzugt ist das volumenkompressible Material (auch: volumenkompressibler Werkstoff) als Elastomer auf der Basis von zelligen, insbesondere mikrozelligen, Polyisocyanat-Polyadditionsprodukten, insbesondere auf der Basis von mikrozelligen Polyurethanelastomeren und/oder thermoplastischem Polyurethan, vorzugsweise enthaltend Polyharnstoffstrukturen ausgebildet.

Volumenkompressible Materialien wie die vorgenannten haben den besonderen Vorteil, dass sie im Vergleich zu anderen Materialien wie beispielsweise Gummi ein extrem hohes elastisches Formänderungsvermögen bei gleichzeitig hoher Standfestigkeit aufweisen.

Die Polyisocyanat-Polyadditionsprodukte sind bevorzugt auf der Basis von mikrozelligen Polyurethanelastomeren, auf der Basis von thermoplastischem Polyurethan oder aus Kombinationen aus diesen beiden Materialien aufgebaut, die ggf. Polyharnstoffstrukturen enthalten können.

Besonders bevorzugt sind mikrozellige Polyurethanelastomere, die in einer bevorzugten Ausführungsform eine Dichte nach DIN 53420 von 200 kg/m3 bis 1100 kg/m3, bevorzugt 300 kg/m3 bis 800 kg/m3, eine Zugfestigkeit nach DIN 53571 von 2 N/mm2, bevorzugt 2 N/mm2 bis 8 N/mm2, eine Dehnung nach DIN 53571 von 300 %, bevorzugt 300 % bis 700 % und eine Weiterreißfestigkeit nach DIN 53515 von bevorzugt 8 N/mm bis 25 N/mm haben.

Bevorzugt handelt es sich bei den Elastomeren um mikrozellige Elastomere auf der Basis von Polyisocyanat-Polyadditionsprodukten, bevorzugt mit Zellen mit einem Durchmesser von 0,01 mm bis 0,5 mm, besonders bevorzugt 0,01 bis 0,15 mm.

Elastomere auf der Basis von Polyisocyanat-Polyadditionsprodukten und ihre Herstellung sind allgemein bekannt und vielfältig beschreiben, beispielsweise in EP-A 62 835, EP-A 36 994, EP-A 250 969, DE-A 195 48 770 und DE-A 195 48 771.

Die Herstellung erfolgt üblicherweise durch Umsetzung von Isocyanaten mit gegenüber Isocyanaten reaktiven Verbindungen.

Die Elastomere auf der Basis von zelligen Polyisocyanat-Polyadditionsprodukten werden üblicherweise in einer Form hergestellt, in der man die reaktiven Ausgangskomponenten miteinander umsetzt. Als Formen kommen hierbei allgemein übliche Formen in Frage, beispielsweise Metallformen, die aufgrund ihrer Form die erfindungsgemäße dreidimensionale Form des Federelements gewährleisten. Die Konturelemente werden in einer Ausführungsform mittels einer Schäumform erzeugt. In einer weiteren Ausführungsform werden sie nachträglich in den konzentrischen Grundkörper eingearbeitet. Es sind auch aus Halbzeugen gefertigte Teile denkbar. Die Fertigung kann z.B. über Wasserstrahlschneiden erfolgen.

Die Herstellung der Polyisocyanat-Polyadditionsprodukte kann nach allgemein bekannten Verfahren erfolgen, beispielsweise indem man in einem ein- oder zweistufigen Prozess die folgenden Ausgangsstoffe einsetzt:
(a) Isocyanat,
(b) gegenüber Isocyanaten reaktiven Verbindungen,
(c) Wasser und gegebenenfalls
(d) Katalysatoren,
(e) Treibmittel und/oder
(f) Hilfs- und/oder Zusatzstoffe, beispielsweise Polysiloxane und/oder Fettsäuresulfonate.

Die Oberflächentemperatur der Forminnenwand beträgt üblicherweise 40°C bis 95°C, bevorzugt 50°C bis 90°C. Die Herstellung der Formteile wird vorteilhafterweise bei einem NCO/OH-Verhältnis von 0,85 bis 1,20 durchgeführt, wobei die erwärmten Ausgangskomponenten gemischt und in einer der gewünschten Formteildichte entsprechenden Menge in ein beheiztes, bevorzugt dicht schließendes Formwerkzeug gebracht werden. Die Formteile sind nach 5 Minuten bis 60 Minuten ausgehärtet und damit entformbar. Die Menge des in das Formwerkzeug eingebrachten Reaktionsgemisches wird üblicherweise so bemessen, dass die erhaltenen Formkörper die bereits dargestellte Dichte aufweisen. Die Ausgangskomponenten werden üblicherweise mit einer Temperatur von 15°C bis 120°C, vorzugsweise von 30°C bis 110°C, in das Formwerkzeug eingebracht. Die Verdichtungsgrade zur Herstellung der Formkörper liegen zwischen 1,1 und 8, vorzugsweise zwischen 2 und 6. Die zelligen Polyisocyanat-Polyadditionsprodukte werden zweckmäßigerweise nach dem "one shot"-Verfahren mit Hilfe der Hochdrucktechnik, der Niederdruck-Technik oder insbesondere der Reaktionsspritzguss-Technik (RIM) in offenen oder vorzugsweise geschlossenen Formwerkzeugen, hergestellt. Alternativ wird ein Pre-Polymer-Prozess zur Herstellung der zelligen Polyisocyanat-Polyadditionsprodukte angewandt. Die Reaktion wird insbesondere unter Verdichtung in einem geschlossenen Formwerkzeug durchgeführt. Die Reaktionsspritzguss-Technik wird beispielsweise beschrieben von H. Piechota und H. Röhr in "Integralschaumstoffe", Carl Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics, März/April 1973, Seiten 76-84.

Weitere Ausgestaltungen der Erfindung sind Gegenstand der Unteransprüche.

Ausführungsbeispiele und Vorteile der Erfindung werden nachstehend unter Bezugnahme auf die Figuren näher erläutert.
- Fig. 1:: zeigt eine schematische Darstellung eines Ausschnitts einer Aufhängung eines Kraftfahrzeuges,
- Fig. 2A: zeigt eine schematische Schnittansicht eines Dämpferlagers gemäß einem ersten Ausführungsbeispiel,
- Fig. 2B: zeigt eine perspektivische Ansicht eines Dämpferlagers gemäß einem ersten Ausführungsbeispiel,
- Fig. 3A: zeigt eine schematische Schnittansicht eines Dämpferlagers gemäß einem zweiten Ausführungsbeispiel,
- Fig. 3B: zeigt eine schematische perspektivische Ansicht eines Dämpferlagers gemäß einem zweiten Ausführungsbeispiel,
- Fig. 4A: zeigt eine schematische Schnittansicht eines Dämpferlagers gemäß einem dritten Ausführungsbeispiel,
- Fig. 4B: zeigt eine schematische perspektivische Ansicht eines Dämpferlagers gemäß einem dritten Ausführungsbeispiel,
- Fig. 5: zeigt einen Graphen zur Veranschaulichung einer Kraftwegkennlinie eines Dämpferlagers, und
- Fig. 6: zeigt einen Graphen zur Veranschaulichung von Kraft-Wegkennlinien eines Dämpferlagers.

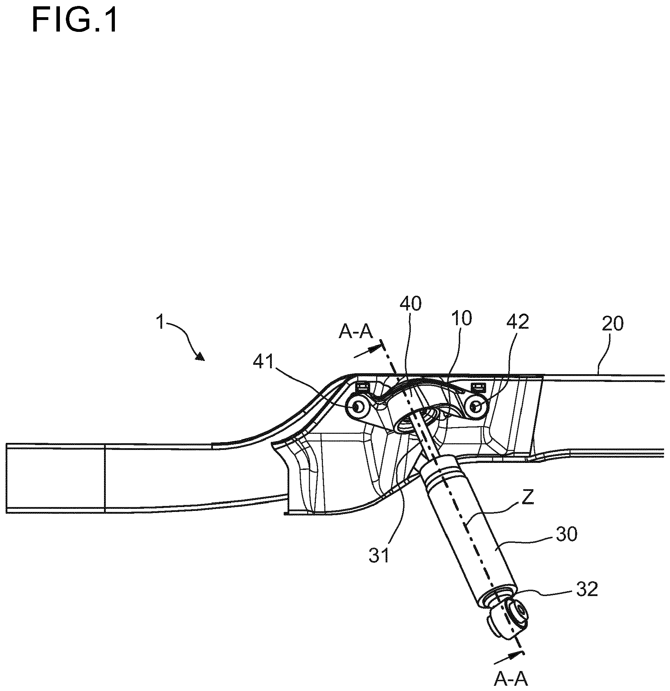

Fig. 1 zeigt eine schematische Darstellung eines Ausschnitts einer Aufhängung eines Kraftfahrzeuges. An einem Teil eines Fahrzeugs 1 wie beispielsweise ein Fahrgestell oder eine Fahrwerkskomponente 20 ist ein Dämpferlager 10 mittels einer Befestigungseinheit oder Halteeinheit 40 befestigt. Das Dämpferlager 10 dient zur Aufnahme eines Endes 31 einer zu dämpfenden Komponente 30. Die zu dämpfende Komponente 30 stellt beispielsweise einen Stoßdämpfer oder ein anderes Federelement dar. Das erste Ende 31 des zu dämpfenden Elementes 30 ist in dem Dämpferlager 10 gelagert, während das zweite Ende 32 an einem weiteren Element koppelbar ist. Das Dämpferlager 10 wird über eine Halte- oder Befestigungseinheit 40 an der Fahrwerkskomponente 20 gehalten.

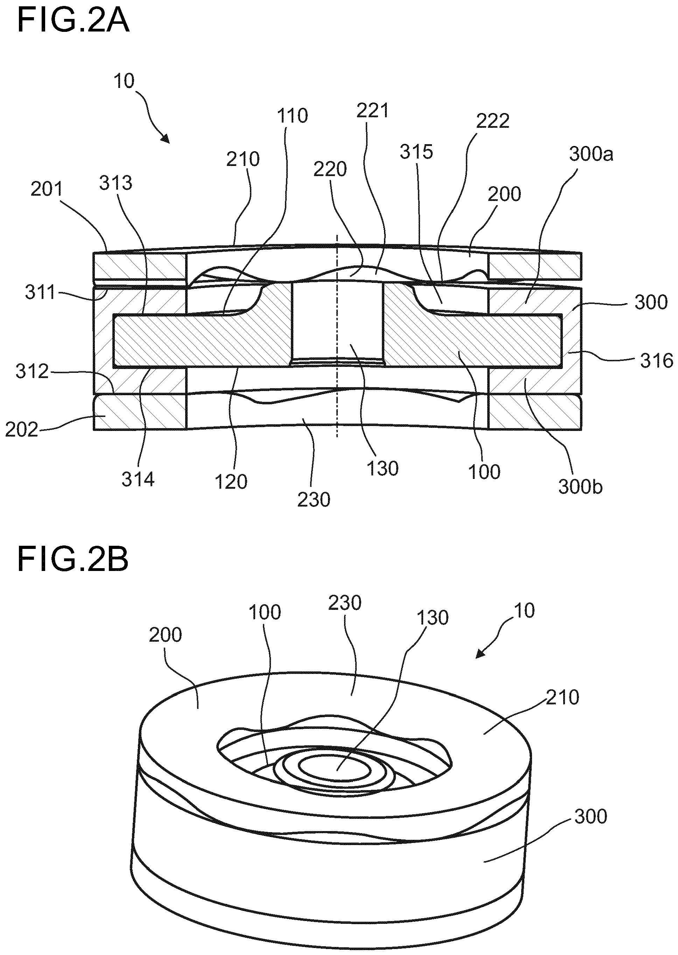

Fig. 2A zeigt eine schematische Schnittansicht und Fig. 2B zeigt eine perspektivische Ansicht eines Dämpferlagers gemäß einem ersten Ausführungsbeispiel. Das Dämpferlager 10 weist einen Metallkern 100 mit einer ersten und zweiten Kern-Kontaktfläche 110, 120 sowie ein mittiges Kernloch 130 auf. Ferner ist eine erste und zweite Dämpfungseinheit 200, 300 vorgesehen. Die zweite Dämpfungseinheit 300 weist ein elastisch verformbares Material und insbesondere ein volumenkompressibles Material auf. Die zweite Dämpfungseinheit weist eine erste und zweite äußere Kontaktfläche 311, 312 auf. Ferner weist die zweite Dämpfungseinheit 300 ein inneres Volumen mit einer ersten und zweiten inneren Kontaktfläche 313, 314 auf. Die erste und zweite innere Kontaktfläche 313, 314 ist in Kontakt mit der ersten und zweiten Kern-Kontaktfläche 110, 120. Die zweite Dämpfungseinheit 300 weist ferner ein mittiges Loch 315 auf. Des Weiteren weist die zweite Dämpfungseinheit 300 einen äußeren Umfang 316 auf, welcher optional den Metallkern 100 senkrecht zur Längsachse umgibt. Ein erstes Ende 300a mit dem Loch 315 und ein zweites Ende 300b mit dem Loch 315 umgibt die erste und zweite Kern-Kontaktfläche 110, 220 in Längsrichtung Z. Der Kern 100 ist somit durch das erste und zweite Ende 300a, 300b der zweiten Dämpfungseinheit 300 sowie durch den äußeren Umfang 316 der zweiten Dämpfungseinheit 300 von der zweiten Dämpfungseinheit 300 umgeben. Lediglich die mittigen Löcher 315 lassen den Kern frei.

Die erste Dämpfungseinheit 200 befindet sich an dem ersten und zweiten Ende 300a, 300b der zweiten Dämpfungseinheit 300 und ist jeweils in Z-Richtung beabstandet dazu angeordnet. Die erste Dämpfungseinheit 200 besteht aus einem nicht-volumenkompressiblen Material. Die Dämpfungseinheit 200 weist ein mittiges Loch 230 auf. Die Dämpfungseinheit 200 kann einteilig oder mehrteilig ausgestaltet sein. Ein erstes Element 201 der zweiten Dämpfungseinheit 200 weist eine erste Kontaktfläche 210 und eine zweite Kontaktfläche 220 auf. Die zweite Kontaktfläche 220 steht in Kontakt mit der ersten äußeren Kontaktfläche 311 der zweiten Dämpfungseinheit 300. Die erste Kontaktfläche 210 der zweiten Dämpfungseinheit 200 stellt damit eine äußere Kontaktfläche bzw. Auflagefläche des Dämpferlagers 100 dar.

Optional können die inneren Kontaktflächen 220 der zweiten Dämpfungseinheit 200 Vorsprünge und Ausnehmungen 222, 221 aufweisen, so dass die innere Kontaktfläche 220 wellenförmig entlang ihres Umfangs ausgestaltet sein kann. Damit stehen die Vorsprünge 222 im nicht vorgespannten Zustand unmittelbar in Kontakt mit der Kontaktfläche 311 der zweiten Dämpfungseinheit 300.

Damit wird ein Hybriddämpferlager vorgesehen. Die Dämpfung des Dämpferlagers wird durch die erste und zweite Dämpfungseinheit realisiert, welche aus unterschiedlichen Materialien hergestellt sind, wobei die zweie Dämpfungseinheit aus einem elastisch verformbaren Material, insbesondere einem volumenkompressiblen Material hergestellt ist. Bei zunehmender Last erfolgt zunächst eine Komprimierung der zweiten Dämpfungseinheit 300, bis sowohl die Vorsprünge 222 als auch die Ausnehmungen 221 gleichmäßig in Kontakt stehen mit dem Material der zweiten Dämpfungseinheit 300.

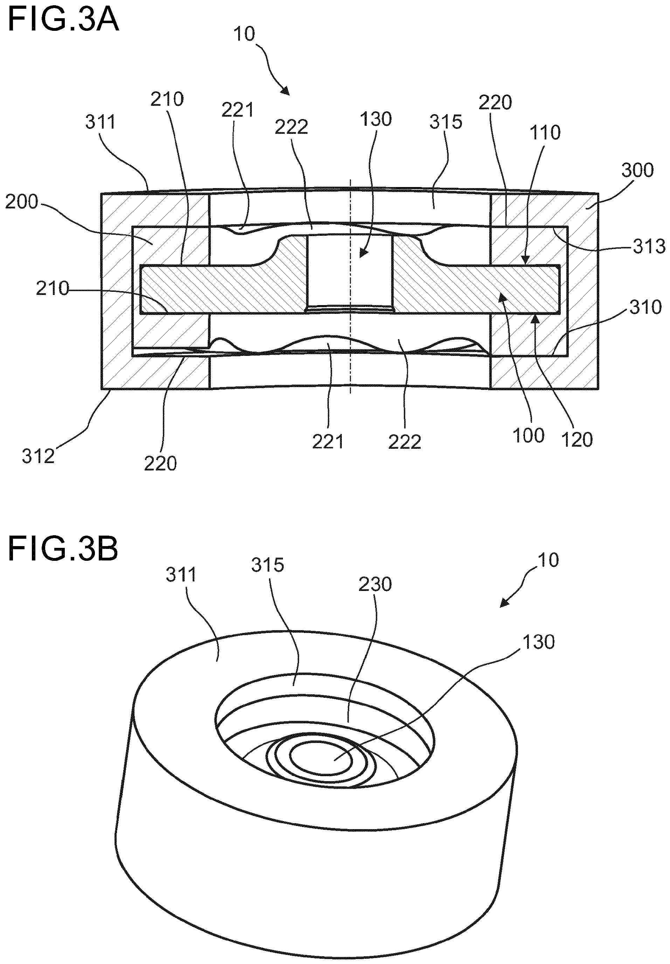

Fig. 3A zeigt eine schematische Schnittansicht und Fig. 3B eine schematische perspektivische Ansicht eines Dämpferlagers gemäß einem zweiten Ausführungsbeispiel. Wie in dem ersten Ausführungsbeispiel weist das Dämpferlager 10 einen Metallkern 100 mit einer ersten und zweiten Kern-Kontaktfläche 110, 120 sowie einem Kernloch 130 auf. Während gemäß dem ersten Ausführungsbeispiel die zweite Dämpfungseinheit 300 unmittelbar in Kontakt stand mit dem Metallkern 100, steht gemäß dem zweiten Ausführungsbeispiel die erste Dämpfungseinheit 200 in Kontakt mit der ersten und zweiten Kernkontaktfläche 110, 120. Die erste Dämpfungseinheit 200 weist eine erste Kontaktfläche 210 und eine zweite Kontaktfläche 220 auf. Die erste Kontaktfläche 210 ist im unmittelbaren Kontakt mit der ersten und zweiten Kern-Kontaktfläche 110, 120. Die zweite Dämpfungseinheit 300 weist eine erste und zweite äußere Kontaktfläche 311, 312 sowie eine erste und zweite innere Kontaktfläche 313, 314 auf. Des Weiteren weist die zweite Dämpfungseinheit 300 ein mittiges Loch 315. Die zweite Dämpfungseinheit 300 ist um die erste Dämpfungseinheit 220 herum angeordnet. Hierbei befinden sich die inneren Kontaktflächen 313, 314 der zweiten Dämpfungseinheit 300 in Kontakt mit den zweiten Kontaktflächen 220 der ersten Dämpfungseinheit 200.

Wie in dem ersten Ausführungsbeispiel können die zweiten Kontaktflächen 220 der zweiten Dämpfungseinheit Vorsprünge 222 und Vertiefungen zwischen benachbarten Vorsprüngen aufweisen. Die Vorsprünge 222 sind im nicht vorgespannten Zustand in Kontakt mit den inneren Kontaktflächen 313, 314 der zweiten Dämpfungseinheit. Im nicht vorgespannten Zustand sind lediglich die Vorsprünge 222 der ersten Dämpfungseinheit 200 in Kontakt mit den inneren Kontaktflächen 313, 314 der zweiten Dämpfungseinheit 300. Mit zunehmender Last auf das Dämpferlager 10 erfolgt zunächst eine Verformung der zweiten Dämpfungseinheit 300. Mit weiter steigender Last auf das Dämpferlager 10 sind nicht nur die Vorsprünge 222, sondern zunehmend auch die Ausnehmungen 221 in Kontakt mit den inneren Kontaktflächen 313, 314 der zweiten Dämpfungseinheit.

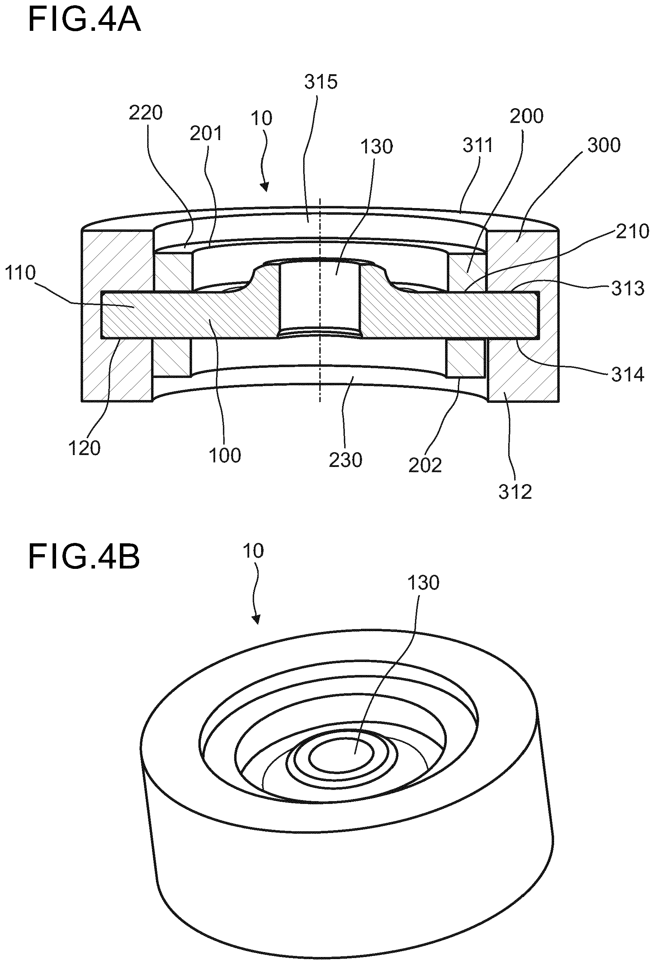

Fig. 4A zeigt eine schematische Schnittansicht und Fig. 4B zeigt eine schematische perspektivische Ansicht eines Dämpferlagers gemäß einem dritten Ausführungsbeispiel. Das Dämpferlager 10 weist einen Metallkern 100 mit einer ersten und zweiten Kern-Kontaktfläche 110, 130 sowie einem mittigen Kernloch 130 auf. Das Dämpferlager 10 gemäß dem dritten Ausführungsbeispiel weist eine erste und zweite Dämpfungseinheit 200, 300 auf, welche optional ringförmig ausgestaltet sind. Die zweite Dämpfungseinheit 300 weist eine erste und zweite äußere Kontaktfläche 311, 312 sowie eine erste und zweite innere Kontaktfläche 313, 314 sowie ein mittiges Loch 315 auf. Die erste und zweite innere Kontaktfläche 313, 314 sind im direkten Kontakt mit einem äußeren Bereich der ersten und zweiten Kern-Kontaktfläche 110, 120. Die zweite Dämpfungseinheit 200 ist im Bereich des Loches 315 der zweiten Dämpfungseinheit 300 vorgesehen. Optional ist die erste Dämpfungseinheit 200 zweiteilig 201, 202 ausgestaltet. Die erste Dämpfungseinheit 200 weist ein Loch 230 auf. Die zweite Dämpfungseinheit 200 ist damit ringförmig ausgestaltet und befindet sich innerhalb der Öffnung 315 der zweiten Dämpfungseinheit 300. Die Dicke der ersten Dämpfungseinheit 200 ist kleiner als die Dicke (zwischen innerer und äußerer Kontaktfläche) der zweiten Dämpfungseinheit 300.

Mit zunehmender Last auf das Dämpferlager 10 wird zunächst die zweite Dämpfungseinheit 300 komprimiert. Mit zunehmender Belastung wird dann auch die erste Dämpfungseinheit 200 komprimiert.

Während gemäß dem ersten und zweiten Ausführungsbeispiel die erste und zweite Dämpfungseinheit in Längsrichtung übereinander angeordnet sind, sind gemäß dem dritten Ausführungsbeispiel die erste und zweite Dämpfungseinheit radial zueinander angeordnet.

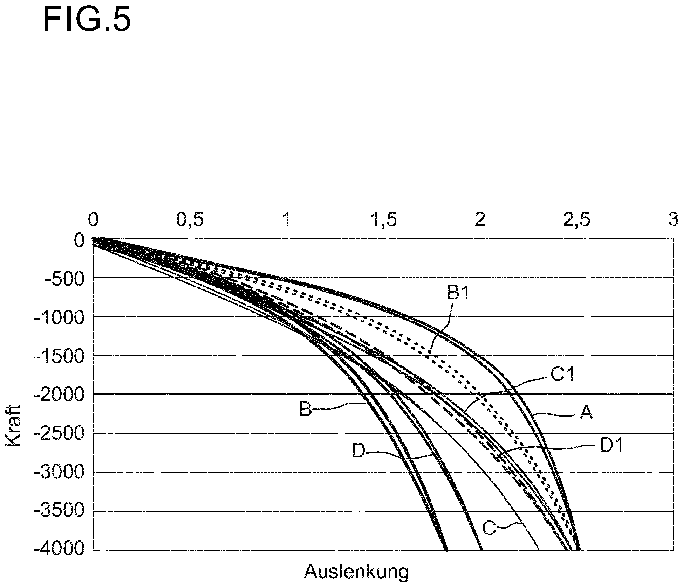

Fig. 5 zeigt einen Graphen zur Veranschaulichung einer Kraftwegkennlinie eines Dämpferlagers. In Fig. 5 ist eine Kennlinie A eines Dämpferlagers gemäß dem Stand der Technik gezeigt. Ferner ist eine Kennlinie B eines Dämpferlagers gemäß dem ersten Ausführungsbeispiel, eine Kennlinie C eines Dämpferlagers gemäß dem zweiten Ausführungsbeispiel und eine Kennlinie D eines Dämpferlagers gemäß dem dritten Ausführungsbeispiel gezeigt. Ferner ist eine Variante B1 eines Dämpferlagers gemäß dem ersten Ausführungsbeispiel, eine Variante C1 eines Dämpferlagers gemäß dem zweiten Ausführungsbeispiel und eine Variante D1 eines Dämpferlagers gemäß dem dritten Ausführungsbeispiel gezeigt.

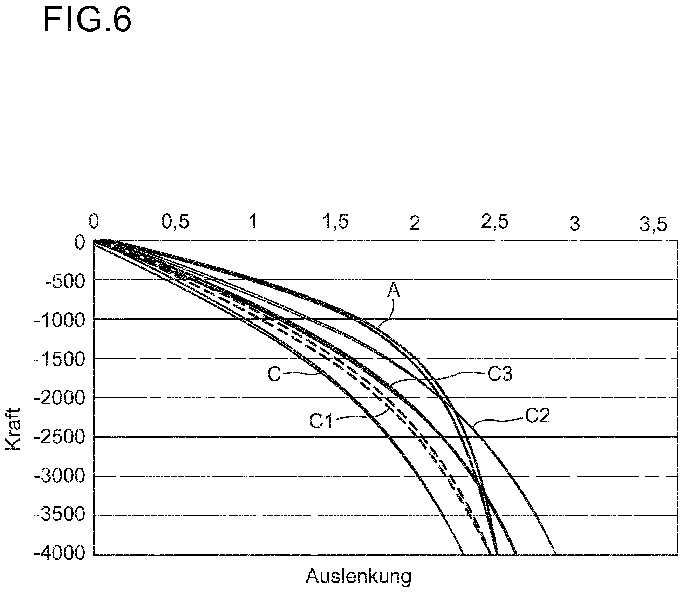

Fig. 6 zeigt einen Graphen zur Veranschaulichung von Kraft-Wegkennlinien eines Dämpferlagers. In Fig. 6 ist eine Kennlinie A eines Dämpferlagers gemäß dem Stand der Technik gezeigt. Ferner ist eine Kennlinie C eines Dämpferlagers gemäß dem zweiten Ausführungsbeispiel gezeigt. Ferner sind drei Kennlinien C1, C2, C3 von Varianten des Dämpferlagers gemäß dem zweiten Ausführungsbeispiel gezeigt.

Optional können die zweiten Kontaktflächen 311, 312 der zweiten Dämpfungseinheit Vorsprünge und Ausnehmungen aufweisen.

Die erste Dämpfungseinheit umfasst mindestens ein Polyurethan, welches bevorzugt erhalten oder erhältlich ist durch Umsetzung mindestens der Komponenten:
(iii) eine Polyisocyanatzusammensetzung;
(iv) eine Polyolzusammensetzung;
(v) optional eine Kettenverlängererzusammensetzung.

Die Polyisocyanatzusammensetzung gemäß (iii) enthält mindestens ein Polyisocyanat ausgewählt aus den Diisocyanaten, bevorzugt ausgewählt aus der Gruppe bestehend aus 1,5-Naphthalendiisocyanat (1,5-NDI), 3,3'-Dimethylbiphenyl-4,4'-diyldiisocyanat (TODI), 2,2'- Diphenylmethandiisocyanat (2,2'-MDI), 2,4'- Diphenylmethandiisocyanat (2,4'-MDI), 4,4'-Diphenylmethandiisocyanat (4,4'-MDI), carbodiimid-modifiziertes 4,4'-MDI, Hexamethylen-1,6-diisocyanat (HDI) und 4,4'-, 2,4'- und 2,2'-Methylendicyclohexyldiisocyanat (H12MDI) und höherkernigen Homologen des Methandiphenyldiisocyanats (Polymer-MDI), weiter bevorzugt mindestens 4,4'-MDI oder carbodiimid-modifiziertes 4,4'-MDI oder eine Mischung aus 4,4'-MDI und carbodiimid-modifiziertem 4,4'-MDI. Die Polyolzusammensetzung gemäß (iv) umfasst mindestens ein Polyester-, Polyether- oder Polyetheresterpolyol, bevorzugt ausgewählt aus der Gruppe der zwei bis sechsfunktionalen Polyesterpolyole und Polyetherpolyole, bevorzugt aus der Gruppe der zwei- und drei funktionalen Polyesterpolyole, bevorzugt aus der Gruppe der zwei -und drei funktionalen Adipinsäureester. Die Kettenverlängererzusammensetzung gemäß (iv) umfasst mindestens eine Verbindung, welche mindestens zwei gegenüber Isocyanaten reaktive funktionelle Gruppen, bevorzugt zwei gegenüber Isocyanaten reaktive funktionelle Gruppen, aufweist, wobei die gegenüber Isocyanaten reaktiven funktionellen Gruppen bevorzugt ausgewählt sind aus der Gruppe von Hydroxylgruppe, Aminogruppe und Thiolgruppe, wobei die mindestens eine Verbindung, welche gegenüber Isocyanaten reaktive funktionelle Gruppen aufweist, weiter bevorzugt ausgewählt ist aus der Gruppe bestehend aus Monoethylenglycol, 1,4-Butandiol, Diethylengylcol, Glycerin, Trimethylolpropan und 2,4-Diamino-3,5-di(methylthio)toluol, und weiter bevorzugt mindestens 1,4-Butandiol umfasst.

In einer bevorzugten Ausgestaltung des Kompositelements liegt die Polyisocyanatzusammensetzung (iii) in Form eines isocyanatterminierten Prepopylmers (iii.a), erhalten oder erhältlich aus der Umsetzung von Polyisocyanatzusammensetzung (iii) mit einem Teil der Polyolzusammensetzung (iv), vor, und das Polyurethan ist erhalten oder erhältlich ist durch Umsetzung von mindestens den Komponenten
(iii.a) isocyanatterminiertes Prepolymer;
(iv.a) verbliebener Teil der Polyolzusammensetzung (iv);
(v) optional Kettenverlängererzusammensetzung.

Bevorzugt ist das mindestens ein Polyurethan der ersten Dämpfungseinheit ein Polyurethangießelastomer oder ein Polyurethanschaum, weiter bevorzugt ein Polyurethangießelastomer.

In einer besonders bevorzugten Ausführungsform ist das Polyurethan der ersten Dämpfungseinheit ein Polyurethangießelastomer, welches erhalten oder erhältlich ist durch Umsetzung eines Prepolymers auf Basis von 4,4'-Diphenylmethan-diisocyanat, carbodiimidmodifiziertem 4,4'-MDI; linearem Polyesterdiol mit einer Hydroxylzahl im Bereich von 35 bis 120 mg KOH/g aufgebaut aus Adipinsäure, Ethylenglykol und 1,4-Butandiol und/oder einem verzweigtem Polyesterdiol mit einer Hydroxylzahl im Bereich von 35 bis 120 mg KOH/g, aufgebaut aus Adipinsäure, Ethylenglykol und 1,4-Butandiol; jeweils aufweisend einen NCO-Gehalt im Bereich von 10 bis 28 Gewichts-%; mit einem Polyol, welches bevorzugt ein lineares Polyesterdiol mit einer Hydroxylzahl im Bereich von 35 bis 120 mg KOH/g aufgebaut aus Adipinsäure, Ethylenglykol und 1,4-Butandiol umfasst, weiter bevorzugt ist; und wobei als Kettenverlängerer mindestens ein lineares aliphatisches Diol mit 2 bis 6 Kohlenstoffatomen, weiter bevorzugt mindestens 1,4-Butandiol, eingesetzt wird. Polyisocyanatkomponente, bevorzugt Prepolymer, und Polyolkomponente werden, bevorzugt vortemperiert auf Temperaturen im Bereich von 30 bis 70 °C, weiter bevorzugt im Bereich von 40 bis 60°C, zusammengeführt und anschließend als reaktives Gemisch bei einer Temperatur im Bereich von 80 bis 100 °C zur Reaktion gebracht. Bevorzugt erfolgt eine thermische Nachbehandlung für eine Zeitspanne von 24 bis 48 Stunden bei einer Temperatur im Bereich von 80 bis 100 °C.

Die zweite Dämpfungseinheit umfasst z. B. ein Polyurethan, bevorzugt ein zelliges Polyurethan, bevorzugt ein zelliges Polyurethan aufweisend eine Dichte im Bereich von 200 bis 1100 kg/m3, weiter bevorzugt eine Dichte im Bereich von 200 bis 750 kg/m3. Weiter bevorzugt besteht in dieser Ausführungsform die zweite Dämpfungseinheit aus dem zelligen Polyurethan.

Das zellige Polyurethan der zweiten Dämpfungseinheit ist bevorzugt erhalten oder erhältlich durch Umsetzung mindestens der Komponenten Isocyanatzusammensetzung, gegenüber Isocyanaten reaktiver Verbindung, Wasser und optional Polisiloxanzusammensetzung und optional Fettsäuresulfonate. Zellige Polyurethane (zP), wie sie im Rahmen dieser Erfindung eingesetzt werden, sind beschrieben in EP 1 379 588 B1 und EP 1 171 515 B1. Sie sind erhalten oder erhältlich durch Umsetzung von (zP.a) Isocyanaten mit (zP.b) gegenüber Isocyanaten reaktiven Verbindungen sowie (d) Wasser, wobei als (zP.b) in einer bevorzugten Ausführungsform ein Polyester mit 2 Hydroxylgruppen, basierend auf der Kondensation mindestens einer Dicarbonsäure mit 2-Methyl-propan-1,3-diol, eingesetzt wird. Der Polyester mit zwei Hydroxylgruppen kann durch allgemein bekannte Verfahren zur Kondensation üblicherweise bei erhöhter Temperatur und vermindertem Druck in bekannten Apparaturen bevorzugt in Gegenwart üblicher Katalysatoren hergestellt werden.

Beispielsweise können die organischen Dicarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220 °C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyester mit 2 Hydroxylgruppen werden die organischen Polycarbonsäuren und/oder-derivate und Diole bevorzugt im Molverhältnis von Dicarbonsäure zu Diol von 1 : 1,01 bis 1 : 1,8, vorzugsweise 1 : 1,05 bis 1 : 1,2, polykondensiert. Als Dicarbonsäuren können allgemein bekannte aliphatische Dicarbonsäuren, wie Bernsteinsäure, Glutarsäure, Adipinsäure, Korksäure, Azelainsäure und Sebacinsäure und/oder aromatische Dicarbonsäuren, wie Phthalsäure, Isophthalsäure und Terephthalsäure Verwendung finden. Die Dicarbonsäuren können einzeln oder als Gemische verwendet werden. Zur Herstellung der Polyesterpolyole kann es gegebenenfalls vorteilhaft sein, anstelle der Carbonsäure die entsprechenden Carbonsäurederivate, wie Carbonsäureester mit 1 bis 4 Kohlenstoffatomen im Alkoholrest, Carbonsäureanhydride oder Carbonsäurechloride zu verwenden. Besonders bevorzugt wird Adipinsäure zur Kondensation mit dem Diolgemisch verwendet. Die Polyester mit 2 Hydroxylgruppen weisen bevorzugt ein Molekulargewicht von 500 bis 6000 g/mol, bevorzugt 1000 bis 3000 g/mol auf. Das Molekulargewicht ist bevorzugt das zahlenmittlere Molekulargewicht. Das zellige Polyurethan ist bevorzugt erhalten oder erhältlich durch Umsatz der Komponenten (zP.a) Isocyanat, (zP.b) gegenüber Isocyanaten reaktive Verbindung, (c) gegebenenfalls Kettenverlängerung- und/oder Vernetzungsmittel, (zP.d) Wasser, und gegebenenfalls (zP.e) Katalysatoren, (zP.f) Treibmittel und/oder (zP.g) Hilfsstoffe; in einem ein- oder zweistufigen Prozess. Bevorzugt wird in einer ersten Stufe ein Isocyanatgruppen aufweisendes Prepolymer herstellt und dieses Pre-polymer in der zweiten Stufe in einer Form mit einer Vernetzerkomponente enthaltend Wasser (zP.d) umsetzt, wobei (zP.e) und gegebenenfalls (zP.f) und/oder (zP.g) in dem Prepolymer und/oder der Vernetzerkomponente enthalten sein können. Die Vernetzerkomponente kann dabei als (zP.g) ein Carbodiimid enthalten. Als weitere Komponenten können wie in EP 1 171 515 B1 beschrieben Polysiloxane und maximal 1 Gewichts-%, bevorzugt 0 bis 0,9 Gewichts-%, sulfonierten Fettsäuren, bezogen auf das Gewicht der zelligen Polyisocyanat-Polyadditionsprodukte, zugesetzt werden. Als Polysiloxane können allgemein bekannte Verbindungen eingesetzt werden, beispielsweise Polymethylsiloxane, Polydimethylsiloxane und/oder Polyoxyalkylen-Silikon-Copolymere; weitere Details zu den eingesetzten Polysiloxanen sind in EP 1 171 515 B1 beschrieben. Als Fettsäuresulfonate können allgemein bekannte sulfonierte Fettsäuren, die auch kommerziell erhältlich sind, eingesetzt werden. Bevorzugt wird als Fettsäuresulfonat sulfoniertes Rizinusöl eingesetzt; wobei Details hierzu in EP 1 171 515 B1 beschrieben sind.

Als Isocyanate (zP.a) des zelligen Polyurethans können allgemein bekannte (cyclo)aliphatische und/oder aromatische Polyisocyanate eingesetzt werden. Besonders eignen sich aromatische Diisocyanate, vorzugsweise 2,2'-, 2,4'- und/oder 5 4,4'-Diphenylmethandiisocyanat (MDI) 1,5-Naphthylendiisocyanat (NDI), 2,4- und/oder 2,6-Toluylendiisocyanat (TDI), 3,3'-Dimethyl-diphenyl-diisocyanat, 1,2-Diphenylethandiisocyanat, Phenylendiisocyanat und/oder (cyclo)aliphatische Isocyanate wie z.B. 1,6-Hexamethylendiisocyanat,1-Isocyanato-3,3,5-trimethyl-5 isocyanatomethylcyclohexan und/oder Polyisocyanate wie z.B. Polyphenylpolymethylenpolyisocyanate. Die Isocyanate können in Form der reinen Verbindung, in Mischungen und/oder in modifizierter Form, beispielsweise in Form von Uretdionen, Isocyanuraten, Allophanaten oder Biureten, vorzugsweise in Form von Urethan- und Isocyanatgruppen enthaltenden Umsetzungsprodukten, sogenannten Isocyanat-Prepolymeren, eingesetzt werden. Bevorzugt werden gegebenenfalls modifiziertes 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI) und/oder Mischungen dieser Isocyanate eingesetzt, weiter bevorzugt ggf. modifiziertes MDI oder NDI oder eine Mischung aus MDI und NDI. Details zu den eingesetzten Isocyanaten und deren Einsetzung sind in EP 1 171 515 B1 beschrieben.

Als gegenüber Isocyanaten reaktive Verbindungen (zP.b) können allgemein bekannte Polyhydroxylverbindungen eingesetzt werden, bevorzugt solche mit einer Funktionalität von 2 bis 3 und bevorzugt einem Molekulargewicht von 60 bis 6000, besonders bevorzugt 500 bis 6000, insbesondere 800 bis 3500. Bevorzugt werden als (zP.b) Polyetherpolyole, Polyesterpolyalkohole und/oder hydroxylgruppenhaltige Polycarbonate eingesetzt. Bevorzugt werden als (zP.b) Polyesterpolyalkohole, im Folgenden auch als Polyesterpolyole bezeichnet, eingesetzt. Geeignete Polyesterpolyole können beispielsweise aus Dicarbonsäuren mit 2 bis 12 Kohlenstoffatomen und zweiwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische verwendet werden. Zur Herstellung der Polyesterpolyole kann es gegebenenfalls vorteilhaft sein, anstelle der Carbonsäure die entsprechenden Carbonsäurederivate, wie Carbonsäureester mit 1 bis 4 Kohlenstoffatomen im Alkoholrest, Carbonsäureanhydride oder Carbonsäurechloride zu verwenden. Beispiele für zweiwertige Alkohole sind Glykole mit 2 bis 16 Kohlenstoffatomen, vorzugsweise 2 bis 6 Kohlenstoffatome, wie z. B. Ethylenglykol, Diethylenglykol, Butandiol-1,4, Pentandiol-1,5, Hexandiol-1,6, Decandiol-1,10, 2-Methylpropan-1,3-diol, 2,2-Dimethylpropandiol-1,3, Propandiol-1,3 und Dipropylenglykol. Je nach den gewünschten Eigenschaften können die zweiwertigen Alkohole allein oder gegebenenfalls in Mischungen untereinander verwendet werden. Als Polyesterpolyole vorzugsweise verwendet werden Ethandiolpolyadipate, 1,4-Butandiol-polyadipate, Ethandiol-butandiol-polyadipate, 1,6-Hexandiol-neopentylglykolpolyadipate, 1,6-Hexandiol-1,4-Butandiol-polyadipate, 2-Methyl-1,3-propandiol-1,4-butandiol-polyadipate und/oder Polycaprolactone, wobei 2-Methyl-1,3-propandiol-1,4-butandiol-polyadipate besonders bevorzugt sind. Geeignete estergruppenhaltige Polyoxyalkylenglykole, im wesentlichen Polyoxytetramethylenglykole, sind Polykondensate aus organischen, vorzugsweise aliphatischen Dicarbonsäuren, insbesondere Adipinsäure mit Polyoxymethylenglykolen des zahlenmittleren Molekulargewichtes von 162 bis 600 und gegebenenfalls aliphatischen Diolen, insbesondere Butandiol-1,4. Ebenfalls geeignete estergruppenhaltige Polyoxytetramethylenglykole sind solche aus der Polykondensation mit e-Caprolacton gebildete Polykondensate. Geeignete carbonatgruppenhaltige Polyoxyalkylenglykole, im wesentlichen Polyoxytetramethylenglykole, sind Polykondensate aus diesen mit Alkyl- bzw. Arylcarbonaten oder Phosgen. Details zu den eingesetzten gegenüber Isocyanaten reaktiven Komponenten und deren Einsetzung sind in EP 1 171 515 B1 beschrieben. Zusätzlich zu den bereits beschriebenen gegenüber Isocyanaten reaktiven Komponenten können des weiteren niedermolekulare Kettenverlängerungs- und/oder Vernetzungsmitteln (zP.b1) mit einem Molekulargewicht von kleiner 500, bevorzugt 60 bis 499 eingesetzt werden, beispielsweise ausgewählt aus der Gruppe der di- und/oder trifunktionellen Alkohole, di- bis tetrafunktionellen Polyoxyalkylen-polyole und der alkylsubstituierten aromatischen Diamine oder von Mischungen aus mindestens zwei der genannten Kettenverlängerungs- und/oder Vernetzungsmittel. Als (zP.b1) können beispielsweise Alkandiole mit 2 bis 12, bevorzugt 2, 4, oder 6 Kohlenstoffatomen verwendet werden, z.B. Ethan-, 1,3-Propan-, 1,5-Pentan-, 1,6-Hexan-, 1, 7 -Heptan-, 1,8-0ctan-, 1,9-Nonan-, 1,10-Decandiol und vorzugsweise 1,4-Butandiol, 5 Dialkylenglykole mit 4 bis 8 Kohlenstoffatomen, wie z.B. Diethylenglykol und Dipropylenglykol und/oder di- bis tetrafunktionelle Polyoxyalkylen-polyole.

Weitere Details zu den niedermolekulare Kettenverlängerungs- und/oder Vernetzungsmitteln (zP.b1) sind in EP 1 171 515 B1 beschrieben, ebenso sind dort die Details zu den (zP.e) Katalysatoren, (zP.f) Treibmittel und/oder (zP.g) Hilfsstoffe zu finden.

In einer bevorzugten Ausführungsform ist das zellige Polyurethan der zweiten Dämpfungseinheit gemäß (2) bevorzugt erhalten oder erhältlich durch Umsetzung mindestens der Komponenten Isocyanatzusammensetzung, welche mindestens MDI oder NDI oder eine Mischung aus MDI und MDI, umfasst; gegenüber Isocyanaten reaktiver Verbindung, welche mindestens einen Polyester mit 2 Hydroxylgruppen, basierend auf der Kondensation mindestens einer Dicarbonsäure, bevorzugt Adipinsäure, mit mindestens 2-Methyl-propan-1,3-diol und ggf. mindestens einem weiteren Diol, bevorzugt 1,4-Butandiol; Wasser und optional Polisiloxanzusammensetzung und optional Fettsäuresulfonate.

Hinsichtlich des Wassers (zP.d) betragen die Wassermengen, die zweckmäßigerweise verwendet werden, 0,01 bis 5 Gewichts-%, vorzugsweise 0,3 bis 3,0 Gewichts-%, bezogen auf das Gewicht der Komponente (zP.b). Das Wasser kann vollständig oder teilweise in Form der wässrigen Lösungen der sulfonierten Fettsäuren eingesetzt werden. Zur Beschleunigung der Reaktion können dem Reaktionsansatz sowohl bei der Herstellung eines Prepolymeren als auch gegebenenfalls bei der Umsetzung eines Prepolymeren mit einer Vernetzerkomponente allgemein bekannte Katalysatoren (f) zugefügt werden. Die Katalysatoren (zP.f) können einzeln wie auch in Abmischung miteinander zugegeben werden. Vorzugsweise sind dies metallorganische Verbindungen, wie Zinn-(11)-Salze von organischen Carbonsäuren, z. B. Zinn-(11)-dioctoat, Zinn-(11)-dilaurat, Dibutylzinndiacetat und Dibutylzinndilaurat und tertiäre Amine wie Tetramethylethylendiamin, N-Methylmorpholin, Diethylbenzylamin, Triethylamin, Dimethylcyclohexylamin, Diazabi- cyclooctan, N,N'-Dimethylpiperazin, N-Methyl,N'-(4-N-Dimethylamino-)Butylpiperazin, N,N,N',N",N"-Pentamethyl-diethylentriamin oder ähnliche. Weiterhin kommen als Katalysatoren in Betracht: Amidine, wie z.B. 2,3-Dimethyl-3,4,5,6-tetrahydropyrimidin, Tris-(dialkylaminoalkyl)-s-hexahydrotriazine, insbesondere Tris-(N,N-dimethylaminopropyl)-s-hexahydrotriazin, Tetra- alkylammoniumhydroxide, wie z.B. Tetramethylammoniumhydroxid, Alkalihydroxide, wie z.B. Natriumhydroxid, und Alkalialkoholate, wie z.B. Natriummethylat und Kaliumisopropylat, sowie Alkalisalze von langkettigen Fettsäuren mit 10 bis 20 C-Atomen und gegebenenfalls seitenständigen OH-5 Gruppen. Je nach einzustellender Reaktivität gelangen die Katalysatoren (zP.f) in Mengen von 0,001 bis 0,5 Gewichts-%, bezogen auf das Prepolymere, zur Anwendung. Gegebenenfalls können in der Polyurethanherstellung übliche Treibmittel (zP.g) verwendet werden. Geeignet sind beispielsweise niedrig siedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100 °C aufweisen. Beispiele derartiger, vorzugsweise verwendeter Flüssigkeiten sind halogenierte, vorzugsweise fluorierte Kohlenwasserstoffe, wie z.B. Methylenchiarid und Dichlormonofluormethan, per-oder partiell fluorierte Kohlenwasserstoffe, wie z.B. Trifluormethan, Difluormethan, Difluorethan, Tetrafluorethan und Heptafluorpropan, Kohlenwasserstoffe, wie z.B. n- und iso-Butan, n- und iso-Pentan sowie die technischen Gemische dieser Kohlenwasserstoffe, Propan, Propylen, Hexan, Heptan, Cyclobutan, Cyclopentan und Cyclohexan, Dialkylether, wie z.B. Dimethylether, Diethylether und Furan, Carbonsäureester, wie z.B. Methyl- und Ethylformiat, Ketone, wie z.B. Aceton, und/oder fluorierte und/oder perfluorierte, tertiäre Alkylamine, wie z.B. Perfluor-dimethyl-iso-propylamin. Auch Gemische dieser niedrigsiedenden Flüssigkeiten untereinander und/oder mit anderen substituierten oder unsubstituierten Kohlenwasserstoffen können verwendet werden. Die zweckmäßigste Menge an niedrigsiedender Flüssigkeit zur Herstellung derartiger zelliger Polyurethane hängt ab von der Dichte, die man erreichen will, sowie von der Menge des bevorzugt verwendeten Wassers. Im allgemeinen liefern Mengen von 1 bis 15 Gewichts-%, vorzugsweise 2 bis 11 Gewichts-%, bezogen auf das Gewicht der Komponente (zP.b), zufriedenstellende Ergebnisse. Besonders bevorzugt wird ausschließlich Wasser (zP.e) als Treibmittel eingesetzt. Details zu weiteren eingesetzten Hilfsstoffen (zP.h) sind der EP 1 171 515 B1 zu entnehmen, insbesondere Absatz [0060].

### Bezuqszeichenliste

- 10: Dämpferlager
- 20: Fahrwerkskomponente / Fahrgestell

- 30: zu dämpfendes Element
- 31: erstes Ende
- 32: zweites Ende

- 40: Halte-/Befestigungseinheit
- 41: erstes Ende
- 42: zweites Ende
- 43: erstes Angriffsfläche
- 44: zweites Angriffsfläche

- 100: Metallkern/
- 110: erste Kern-Kontaktfläche
- 120: zweite Kern-Kontaktfläche
- 130: Kernloch
- 200: erste Dämpfungseinheit
- 201: erstes Element
- 202: zweites Element
- 210: erste Kontaktfläche
- 220: zweite Kontaktfläche
- 221: Ausnehmungen
- 222: Ausnehmungen
- 230: mittiges Loch

- 300: zweite Dämpfungseinheit
- 300a: erstes Ende
- 300b: zweites Ende
- 311: erste äußere Kontaktfläche
- 312: zweite äußere Kontaktfläche
- 313: erste innere Kontaktfläche
- 314: zweite innere Kontaktfläche
- 315: Loch
- 316: äußerer Umfang

## Patentansprüche

1. Dämpferlager (10), mit
einer Längsachse (Z),
einem Metallkern (100) mit einem mittigen Kernloch (130) entlang der Längsachse (Z) zur Aufnahme eines zu dämpfenden Elementes (30) und einer ersten und zweiten Kern-Kontaktfläche (110, 120),
einer ersten Dämpfungseinheit (200) aus einem nicht volumenkompressiblen Material mit mindestens einer ersten und zweiten Kontaktfläche (210, 220) und einem Loch (230), und
einer zweiten Dämpfungseinheit (300) aus einem volumenkompressiblen Material mit einer ersten und zweiten äußeren Kontaktfläche (311, 312) und einem Loch (315),
wobei die erste oder die zweite Dämpfungseinheit (200, 300) den Metallkern (100) mit dem Kernloch (130) zumindest teilweise derart umgibt, dass das Kernloch (130) frei bleibt,
wobei die zweite oder die erste Dämpfungseinheit (300, 200) die erste oder die zweite Dämpfungseinheit (200, 300) zumindest teilweise umgibt und das Kernloch (130) frei bleibt, so dass die erste Kontaktfläche (210) der ersten Dämpfungseinheit (200) oder die ersten und zweiten äußeren Kontaktflächen (311, 312) der zweiten Dämpfungseinheit (300) äußere Auflageflächen des Dämpferlagers (10) in Längsrichtung (z) bilden,
wobei die Kontaktflächen (210, 220; 311, 312) jeweils senkrecht zur Längsachse (Z) angeordnet sind.

2. Dämpferlager (10) nach Anspruch 1, wobei
die zweite Dämpfungseinheit (300) ein inneres Volumen mit einer ersten und zweiten inneren Kontaktfläche (313, 314) aufweist
wobei die ersten und zweiten inneren Kontaktflächen (313, 314) der zweiten Dämpfungseinheit (300) in Kontakt mit den ersten und zweiten Kern-Kontaktflächen (110, 120) stehen,
wobei die ersten und zweiten äußeren Kontaktflächen (311, 312) der zweiten Dämpfungseinheit (300) in Kontakt mit den zweiten Kontaktflächen (220) der ersten Dämpfungseinheit (200) stehen,
wobei die ersten Kontaktflächen (210) der ersten Dämpfungseinheit (200) die äußeren Auflageflächen des Dämpferlagers (10) bilden.

3. Dämpferlager (10) nach Anspruch 2, wobei
die zweiten Kontaktflächen (220) der ersten Dämpfungseinheit (200) Vorsprünge (222) und Ausnehmungen (221) aufweisen,
wobei im nicht vorgespannten Zustand des Dämpferlagers (10) die Vorsprünge (222) in Kontakt mit der ersten und zweiten äußeren Kontaktfläche (311, 312) der zweiten Dämpfungseinheit (300) stehen.

4. Dämpferlager (10) nach Anspruch 3, wobei
die zweiten Kontaktflächen (311, 312) der zweiten Dämpfungseinheit (300) Vorsprünge und Ausnehmungen aufweisen,

5. Dämpferlager nach Anspruch 1, wobei
die zweite Dämpfungseinheit (300) ein inneres Volumen mit einer ersten und zweiten inneren Kontaktfläche (313, 314) aufweist,
wobei die ersten und zweiten inneren Kontaktflächen (313, 314) der zweiten Dämpfungseinheit (300) in Kontakt mit den zweiten Kontaktflächen (220) der ersten Dämpfungseinheit (200) stehen,
wobei die ersten Kontaktflächen (210) der ersten Dämpfungseinheit (200) in Kontakt mit den ersten und zweiten Kern-Kontaktflächen (110, 120) der zweiten Dämpfungseinheit (300) stehen.

6. Dämpferlager (10) nach Anspruch 5, wobei
die zweiten Kontaktflächen (220) der ersten Dämpfungseinheit (200) Vorsprünge (222) und Ausnehmungen (221) aufweisen,
wobei im nicht vorgespannten Zustand des Dämpferlagers (10) die Vorsprünge (222) in Kontakt mit der ersten und zweiten inneren Kontaktfläche (313, 314) der zweiten Dämpfungseinheit (300) stehen.

7. Dämpferlager (10) nach Anspruch 5, wobei
die zweiten Kontaktflächen (311, 312) der zweiten Dämpfungseinheit (300) Vorsprünge und Ausnehmungen aufweisen,

8. Dämpferlager (10) nach Anspruch 1, wobei
die erste Dämpfungseinheit (200) ringförmig ausgestaltet ist,
wobei die zweite Dämpfungseinheit (300) ringförmig ausgestaltet ist und ein inneres Volumen mit einer ersten und zweiten inneren Kontaktfläche (313, 314) aufweist,
wobei die ersten und zweiten inneren Kontaktflächen (313, 314) der zweiten Dämpfungseinheit (300) in Kontakt mit den ersten und zweiten Kern-Kontaktflächen (110, 120) stehen,
wobei die ersten Kontaktflächen (210) der ersten Dämpfungseinheit (200) in Kontakt mit der ersten und zweiten Kern-Kontaktfläche (110, 120) stehen.

9. Dämpferlager (10) nach Anspruch 8, wobei
die erste Dämpfungseinheit (200) eine erste Dicke aufweist,
wobei die zweite Dämpfungseinheit (300) jeweils zwischen den inneren und äußeren Kontaktflächen (311, 312, 313, 314) eine zweite Dicke aufweist.

10. Dämpferlager (10) nach Anspruch 8, wobei
die zweiten Kontaktflächen (220) der ersten Dämpfungseinheit (200) Vorsprünge (222) und Ausnehmungen (221) aufweisen,

11. Dämpferlager (10) nach Anspruch 8, wobei
die zweiten Kontaktflächen (311, 312) der zweiten Dämpfungseinheit (300) Vorsprünge und Ausnehmungen aufweisen,

12. Fahrzeug, mit
einer Fahrwerkskomponente (20),
mindestens einem Dämpferlager (10) nach einem der Ansprüche 1 bis 11, und
einer Halteeinheit (40) zum Halten der Dämpfereinheit (10) an der Fahrwerkskomponente (20).
